# EUROPÄISCHE PATENTSCHRIFT

(11) **EP 3 158 841 B1**
(45) Veröffentlichungstag und Bekanntmachung des Hinweises auf die Patenterteilung: **15.03.2023**
(21) Anmeldenummer: 16401068.8
(22) Anmeldetag: 13.10.2016
(51) Int. Cl.: A01B 29/04

(54) **BODENWALZE**
SOIL ROLLER
ROULEAU AGRICOLE

(30) Priorität: 22.10.2015 DE 102015117998
(43) Veröffentlichungstag der Anmeldung: 26.04.2017
(73) Patentinhaber: Amazonen-Werke H. Dreyer SE & Co. KG, 49205 Hasbergen (DE)
(72) Erfinder: Reinke, Wilfried, 26123 Oldenburg (DE); Wilken, Martin, 26123 Oldenburg (DE)

(56) Entgegenhaltungen:
- EP-B1- 0 861 577
- DE-T2- 69 807 570
- FR-A1- 2 784 331
- US-A1- 2013 233 581

## Beschreibung

Die Erfindung betrifft eine Bodenwalze gemäß dem Oberbegriff des Anspruchs 1.

Bodenwalzen, insbesondere sogenannte Keilringwalzen, dienen unter vorwiegend dazu, den aufgelockerten Erdboden vor oder nach dem Einbringen des Saatgutes wieder gezielt zu verfestigen. Hierzu sind entsprechende Bodenwalzen, wie in der FR 2 784 331 A1 oder EP 0 861 577 B1 gezeigt ist, mit einer Mehrzahl sogenannter Bodenverdichtungsringe ausgestattet, die voneinander beabstandet auf einem Tragkörper angeordnet sind. Bei dem Tragkörper kann es sich beispielsweise um einen Hohlkörper wie beispielsweise ein Rohr, aber auch um Körper aus Vollmaterial oder gefüllte Körper, wie eine Achse oder ähnliches handeln.

Die Bodenverdichtungsringe können aus den verschiedensten Materialien gefertigt sein. Vorzugsweise handelt es sich um elastische Materialien, wie insbesondere Gummi. Durch die genannte Beabstandung der Bodenverdichtungsringe wird eine gezielte, streifenweise Rückverfestigung des Bodens insbesondere im Bereich der parallel zueinander verlaufenden Säfurchen ermöglicht. Beim Einbringen des Saatguts in den rückverfestigten Bereich findet dieses optimierte Bedingungen für das Wachstum vor. Die Bodenverdichtungsringe können umfangsseitig je nach konkretem Einsatzzweck beispielsweise mit Noppen versehen oder glatt sein wie auch beliebige Längs- oder Querprofile aufweisen.

Die einzelnen Bodenverdichtungsringe der Bodenwalze sind mit ihren zentralen Öffnungen auf den Tragkörper aufgesteckt. Zwischen jeweils zwei der Bodenverdichtungsringe ist ein sogenannter Abstandsring als Abstandshalter vorgesehen. Es handelt sich dabei insbesondere um zylinderförmige Kunststoffringe. In der Regel haben alle Abstandsringe dieselbe Breite. Um einen sicheren Halt und damit einen stabilen Aufbau der Bodenwalze gewährleisten zu können, weisen die Bodenverdichtungsringe seitlich umlaufende Haltenuten auf. In diese Haltenuten werden die Abstandsringe mit ihren freien Seitenkanten eingesteckt. Die beidseitig angeordneten Haltenuten der Bodenverdichtungsringe können dabei insbesondere in einer schwalbenschwanzförmigen Form am Innendurchmesser der Bodenverdichtungsringe ausgeführt sein.

Um einen stabilen Halt der alternierend auf den Tragkörper angeordneten Bodenverdichtungsringe und Abstandsringe zu gewährleisten, werden diese mit auf dem Tragkörper verspannt. Hierzu sind an den beiden Endbereichen der beiden Bodenwalzen sogenannte Klemmronden angeordnet. Diese Klemmronden sind auf die Endbereiche des Tragkörpers aufgeschraubt und verpressen so die Bodenverdichtungsringe und Abstandsringe miteinander. Gleichzeitig verklemmen sich die Bodenverdichtungsringe mit dem Tragkörper.

Nachteilig an den bekannten Bodenwalzen als Keilringwalzen ist, dass die beiden an den Endbereichen der Bodenwalze angeordneten äußeren Bodenverdichtungsringe einem höheren Verschleiß unterliegen und mit den bekannten Klemmronden Stabilitätsprobleme zeigen. Eine hierzu in der Praxis vorgeschlagene Lösung der Vergrößerung der Klemmronde mittels einer Abstützkante führt dabei dazu, dass sich Schmutz im Bereich der Klemmronde und Bodenverdichtungsringen absetzt. Außerdem kann es zu erhöhtem Verschleiß der Bodenverdichtungsringe kommen. Hierdurch wird die Funktionsweise und Lebensdauer der Bodenwalze vor allem am Randbereich erheblich eingeschränkt.

Aufgabe der vorliegenden Erfindung ist daher, die Ausbildung der äußeren Bodenverdichtungsringe und/oder der Klemmronden dahingehend zu verbessern, dass eine verbesserte Abstützung und Lebensdauer erreicht wird.

Die Bodenwalze mit den Merkmalen des Anspruchs 1 löst diese Aufgabe. Demnach weist jede der beiden äußeren Bodenverdichtungsringe auf den Tragkörper zusätzlich zu der Haltenut wenigstens eine Stütznut auf, die für ein Eingreifen eines mit dem Tragkörper verbundenen Stützabschnitts vorgesehen ist. Der Durchmesser der Stütznut ist größer als der Durchmesser der Haltenut. Da die Stütznut dazu dient, den äußeren Bodenverdichtungsring zusätzlich abzustützen, ist ein größerer Durchmesser der Stütznut als der Haltenut vorgesehen. Somit kann der äußere Bodenverdichtungsring verbessert gegenüber seitlichen Kräften abgestützt werden. Der Stützabschnitt sorgt dafür, dass der äußere Bodenverdichtungsring in besonderer Weise in seitlicher Richtung abgestützt wird. Somit werden insbesondere seitliche Kräfte besser abgefangen als dies im Stand der Technik der Fall ist. Darüber hinaus sorgt die Ausbildung mit ineinander greifender Stütznut und Stützabschnitt dafür, dass ein Eindringen von Schmutz in den Bereich zwischen Stützabschnitt und Bodenverdichtungsring größtenteils unterbunden wird.

Vorzugsweise ist die wenigstens eine Stütznut in der Seitenfläche beziehungsweise Seitenflanke des wenigstens einen Bodenverdichtungsrings angeordnet. Weiter bevorzugt ist die wenigstens eine Haltenut in der Seitenfläche beziehungsweise Seitenflanke des wenigstens einen Bodenverdichtungsrings angeordnet, insbesondere der äußeren Bodenverdichtungsringe. Hierdurch wird sichergestellt, dass der Stützabschnitt beziehungsweise die Abstandsringe seitlich in die entsprechenden Nuten der Bodenverdichtungsringe eingreifen können. Somit wird eine sichere und stabile Befestigung erreicht. Es wird insgesamt erreicht, dass einerseits die Bodenverdichtungsringe sicher mittels der Haltenut am Tragkörper fixiert werden und andererseits eine stabile Abstützung der äußeren Bodenverdichtungsringe mittels der Stütznut erfolgt.

Weiter bevorzugt weisen die äußeren Bodenverdichtungsringe nur einseitig Stütznuten auf. Vorzugsweise sind die Stütznuten nur auf einer Seitenfläche beziehungsweise Seitenflanke angeordnet, vorzugsweise der nach außen weisenden, also insbesondere auf der Außenseite des Bodenverdichtungsrings nach dessen Anordnung auf dem Tragkörper. Die Stütznuten sind typischerweise auch nur an den äußeren Endbereichen der Bodenwalze erforderlich, da es dort einer besonderen Abstützung bedarf. Somit sind die Stütznuten auch nur auf diesen Außenseiten ausgebildet.

Die Stütznut und/oder die Haltenut ist/sind vorzugsweise kreisförmig ausgebildet, vorzugsweise umlaufend kreisförmig. Dies bedeutet, dass die Nut als kreisförmige Nut am Bodenverdichtungsring ausgebildet ist. Vorzugsweise verläuft diese kreisförmige Nut um den Mittelpunkt des Bodenverdichtungsrings herum kreissymmetrisch, insbesondere in der Seitenflanke des Bodenverdichtungsrings. Hiermit wird eine symmetrische Ausbildung der Walze erreicht.

Der Querschnitt des randseitigen Stützabschnitts ist bevorzugt zum Querschnitt der Stütznut korrespondierend ausgebildet. Stützabschnitt und Stütznut sind vorzugsweise formschlüssig zueinander ausgebildet. Dabei greift der Stützabschnitt insbesondere formschlüssig in die Stütznut ein. Durch eine formschlüssige oder zumindest nahezu formschlüssige Ausbildung wird ein Eindringen von Schmutzpartikeln in den Bereich zwischen Stützabschnitt und Bodenverdichtungsring beziehungsweise Stütznut verhindert oder zumindest deutlich reduziert. Damit wird insbesondere die eingangs gestellte Aufgabe in besonderer Weise gelöst.

Die Stütznut und/oder der Stützabschnitt weisen vorzugsweise zumindest im Wesentlichen einen halbkreisförmigen, trapezförmigen und/oder rechteckigen Querschnitt auf. Derartige Geometrien weisen besondere Vorteile bei der Fertigung auf. Insbesondere lässt sich ein halbkreisförmiger, trapezförmiger beziehungsweise rechteckiger Querschnitt einer Nut in vorteilhafter Weise leicht ausbilden. Eine entsprechende korrespondierende Ausbildung des Stützabschnitts ist ebenso einfach herstellbar. Alternativ können Stützabschnitt und Stütznut aber auch andere Querschnitte aufweisen, wie insbesondere (kreis-)bogenförmige, ellipsenförmige, polygonale Querschnitte oder Kombinationen daraus.

Weiter bevorzugt sind die Bodenverdichtungsringe und die Abstandsringe auf dem Tragkörper miteinander verspannt. Dies erfolgt vorzugsweise mittels zweier endseitig beziehungsweise außenseitig des Tragkörpers angeordneten Klemmronden. Diese sind an den längsseitigen Endbereichen der Bodenwalze angeordnet. Wenigstens eine der Klemmronden, vorzugsweise beide Klemmronden sind mit dem Tragkörper lösbar verbunden. Hierzu dienen insbesondere Schrauben oder andere lösbare Verbindungsmittel. Durch Schrauben lässt sich insbesondere die Anpresskraft beziehungsweise Spannkraft des Pakets aus Bodenverdichtungsringen und Abstandsringen auf dem Tragkörper einstellen. Somit kann optimale Andruckkraft zum sicheren Fixieren der Bestandteile der Bodenwalze eingestellt werden.

Der Stützabschnitt zum Eingreifen in die Stütznut ist insbesondere an der wenigstens einen Klemmronde ausgebildet. Vorzugsweise ist der Stützabschnitt randseitig beziehungsweise umfangseitig der Klemmronde ausgebildet. Dies bedeutet, dass am äußeren Umfang der Klemmronde der umlaufende Stützabschnitt vorgesehen ist. Indem die Klemmronde eine vorzugsweise kreisförmige äußere Form aufweist, weist auch der Stützabschnitt damit einen kreisförmigen Verlauf auf.

Der Stützabschnitt der Klemmronde ist vorzugsweise aus dem Material der Klemmronde gebildet. Insbesondere ist der Stützabschnitt aus dem Material der Klemmronde geformt beziehungsweise gebogen. Das bedeutet, dass die gesamte Klemmronde durch einen Umformungsprozess, wie beispielsweise einen Pressvorgang, hergestellt ist, einschließlich des Stützabschnitts. Die Klemmronde ist mit dem Stützabschnitt vorzugsweise einstückig ausgebildet, mithin aus einem Materialstück geformt. Dies stellt eine einfache und wirtschaftliche Produktionsweise sicher.

Der Stützabschnitt ist insbesondere als U-förmiger Randabschnitt der Klemmronde ausgebildet. Es handelt sich insbesondere um einen umlaufenden Randabschnitt der Klemmronde. Die U-förmige Ausbildung ist insbesondere in einer Schnittansicht der Klemmronde senkrecht zur Ebene der Ronde zu erkennen. Damit der Stützabschnitt in die entsprechende Stütznut eingreifen kann, ist der Stützabschnitt als U-förmiges Profil am Rand der Klemmronde ausgebildet.

Die Klemmronde greift erfindungsgemäß insbesondere sowohl in die Haltenut als auch in die Stütznut des zugeordneten äußeren Bodenverdichtungsrings ein. Hierzu weist die Klemmronde sowohl einen Halteabschnitt als auch einen Stützabschnitt auf. Diese ist insbesondere oben beschrieben. Der Halteabschnitt der Klemmronde entspricht dabei in der Wirkung den eingreifenden Abstandsringen, die zwischen den Bodenverdichtungsringen angeordnet sind. Somit erfüllt die Klemmronde vorzugsweise gleichzeitig die Funktion der Befestigung und Halterung des Bodenverdichtungsrings auf dem Tragkörper einerseits und der Abstützung am Außenflanke andererseits.

Bevorzugt ist der Kontakt zwischen Bodenverdichtungsring und Klemmronde nach Art einer Labyrinthdichtung vorgesehen, nämlich insbesondere das Eingreifen der Klemmronde in Stütznut und Haltenut des Bodenverdichtungsrings. Eine Labyrinthdichtung erfüllt dadurch ihren Zweck, dass mehrere ineinander greifende Abschnitte zweier gegeneinander abzudichtender profilierter Körper aneinander anliegen. Durch eine entsprechende Verzahnung oder Profilierung wird ein geradliniger Durchtritt von Schmutz oder ähnlichen Partikeln zwischen Bodenverdichtungsring und Klemmronde größtenteils verhindert.

Weiter bevorzugt ist der Außendurchmesser der Klemmronde größer als der Außendurchmesser der Abstandsringe. Damit wird eine hinreichende Abstützung insbesondere des äußeren Bodenverdichtungsrings in seitlicher Richtung nach außen erreicht. Insbesondere ist der Stützabschnitt der Klemmronde mit einem größeren Außendurchmesser ausgestattet als es die Abstandsringe sind. Hierdurch wird die verbesserte Wirkung der Wirkung der Abstützung in erfindungsgemäßer Weise besonders gut realisiert.

Bevorzugte Ausführungsbeispiele der Erfindung werden im Folgenden anhand der Zeichnung näher beschrieben. In dieser zeigen:
- Fig. 1: einen perspektivischen Ausschnitt einer aus dem Stand der Technik bekannten Bodenwalze,
- Fig. 2: eine Schnittansicht der Bodenwalze der Fig. 1,
- Fig. 3: eine Detailansicht der Schnittansicht der Fig. 2,
- Fig. 3a: die Detailansicht nach Fig. 3 in Explosionsdarstellung,
- Fig. 4: einen perspektivischen Ausschnitt einer verbesserten Bodenwalze in einer alternativen Ausführung,
- Fig. 5: eine Schnittansicht der Bodenwalze der Fig. 4,
- Fig. 6: eine Detailansicht der Seitenansicht der Fig. 5,
- Fig. 6a: die Detailansicht nach Fig. 6 in Explosionsdarstellung,
- Fig. 7: einen perspektivischen Ausschnitt einer erfindungsgemäß verbesserten Bodenwalze,
- Fig. 8: eine Seitenansicht der Bodenwalze der Fig. 7,
- Fig. 9: eine Detailansicht der Schnittansicht der Fig. 8, und
- Fig. 9a: die Detailansicht nach Fig. 9 in Explosionsdarstellung.

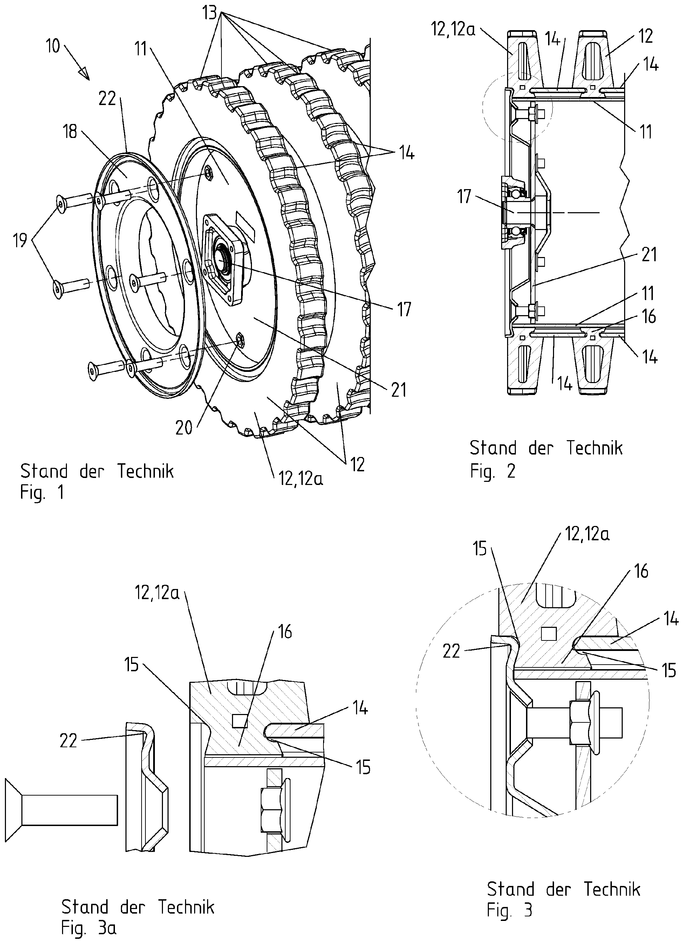

Die Fig. 1 zeigt einen Ausschnitt einer Bodenwalze 10 in einer perspektivischen Darstellung. Die Fig. 2 und 3 zeigen diese als Schnittansichten, Fig. 3a als Explosionsdarstellung. Dargestellt ist hier jeweils lediglich einer der beiden Endbereiche der Bodenwalze 10, die aber typischerweise identisch ausgebildet sind.

Die Bodenwalze 10 weist ein langgestrecktes Tragrohr 11 auf. Auf diesen Tragrohr 11 als Tragkörper ist eine Vielzahl von Bodenverdichtungsringen 12, 12a aufgebracht. Jeder Bodenverdichtungsring 12, 12a dient dazu, eine streifenförmige Verdichtung des darunter befindlichen Erdbodens zu erreichen. Die in diesem Ausführungsbeispiel gezeigten Bodenverdichtungsringe 12, 12a sind zusätzlich mit profilierten Noppen 13 entlang des Umfangs versehen.

Zwischen jeweils zwei Bodenverdichtungsringen 12, 12a ist jeweils ein Abstandsring 14 angeordnet. Grundsätzlich können auch mehrere Abstandsringe 14 vorgesehen sein, um die seitlichen Abstände zwischen den Bodenverdichtungsringen 12, 12a einzustellen. Damit kann auch der Abstand der streifenförmigen Bodenverdichtungen eingestellt oder variiert werden.

Die Abstandsringe 14 dienen einerseits dazu, die Bodenverdichtungsringe 12 in einem definierten Abstand zu halten. Hier weisen alle zylinderförmigen Abstandsringe 14 dieselbe Breite auf. Andererseits sorgen die Abstandsringe 14 gleichzeitig auch dafür, dass die Bodenverdichtungsringe 12 sicher in Position gehalten werden. Das wird dadurch erreicht, dass die Abstandsringe 14 mit ihren kreisförmig umlaufenden Seitenkanten in entsprechende Haltenuten 15 der Bodenverdichtungsringe 12, 12a eingesetzt werden. Diese Haltenuten 15 sind am Innenumfang der zentralen Öffnung der Bodenverdichtungsringe 12, 12a angeordnet. Im Querschnitt betrachtet sind die Haltenuten 15 auf beiden Seiten beziehungsweise in beiden Seitenflanken der Bodenverdichtungsringe 12, 12a ausgebildet. Sie können dabei, wie hier gezeigt ist, insbesondere in einem Vorsprung 16 angeordnet sein, der hier nach Art eines Schwalbenschwanzes ausgebildet ist.

Das Tragrohr 11 weist zur drehbaren Lagerung der Bodenwalze 10 außerdem wenigstens ein zentrales Achslager 17 auf. Derartige Achslager 17 sind vorzugsweise an beiden Endbereichen des Tragrohrs 11 ausgebildet und dienen so zur Lagerung der Bodenwalze 10 auf einer hier nicht gezeigten Achse und nicht gezeigtem Tragrahmen. Typischerweise ist die Bodenwalze 10 als mitlaufende Walze 10 zwar nicht angetrieben. Dies kann aber in bestimmten Ausführungsbeispielen der Bodenwalze 10 dennoch der Fall sein.

Um die Bodenverdichtungsringe 12, 12a und die dazwischen angeordneten Abstandsringe 14 auf dem Tragrohr 11 zu fixieren, ist jeweils eine Klemmronde 18 an jedem der beiden Endbereiche des Tragrohrs 11 angeordnet. Diese Klemmronden 18 sind dazu mittels Schrauben 19 mit dem Tragrohr 11 verbunden. Hierzu sind entsprechende Gewinde 20 in einer Abschlussplatte 21 des Tragrohrs 11 an dessen Endbereichen eingelassen, beispielsweise in Form eingesetzter Schraubenmuttern, Einschlagmuttern oder ähnlichem. Mit Hilfe der Schrauben 19 kann die Klemmronde 18 dann mit diesen Gewinden 20 an der Abschlussplatte 21 verschraubt werden. So werden die zwei an den gegenüberliegenden Endbereichen des Tragrohrs 11 angeordneten Klemmronden 18 gegeneinander verspannt. Dies geschieht dadurch, dass das Paket aus Bodenverdichtungsringen 12 und Abstandsringen 14 zwischen den beiden Klemmronden 18 angeordnet ist und durch das Verschrauben zusammengepresst wird. Die Abstandsringe 14 werden so gegen ein Herausbewegen aus den Haltenuten 15 fixiert. Hierdurch wird eine stabile und sichere Befestigung der Bodenverdichtungsringe 12, 12a auf dem Tragkörper 11 mittels der Abstandsringe 14 erreicht. Außerdem werden die Bodenverdichtungsringe 12, 12a tragkörperseitig gegen den Tragkörper 11 verklemmt.

Im gezeigten Ausführungsbeispiel der Fig. 1 bis 3 und 3a ist die Klemmronde 18 lediglich mit einem Halteabschnitt 22 ausgestattet. Dieser Halteabschnitt 22 dient dazu, in die am Bodenverdichtungsring 12 vorgesehene Haltenut 15 eingesetzt werden. Der Halteabschnitt 22 der Klemmronde 18 wird in den am Endbereich des Tragrohrs 11 angeordneten Bodenverdichtungsring 12, 12a, der daher auch als äußerer Bodenverdichtungsring 12a bezeichnet wird, eingesetzt. Damit wird die oben beschriebene Fixierung der Bodenverdichtungsringe 12 auf dem Tragrohr 11 auch für die beiden äußeren Bodenverdichtungsringe 12a erreicht. Diese sind etwas schmaler als die übrigen Bodenverdichtungsringe 12 beziehungsweise mit steiler verlaufender Außenflanke ausgebildet.

Allerdings weist diese Befestigungsart auch Nachteile auf. Da die äußeren Bodenverdichtungsringe 12a eine einseitig nach außen etwas steileren Verlauf und insgesamt schmaleren Querschnitt aufweisen, ist deren eigene Stabilität etwas reduziert. Darüber hinaus ist der jeweilige äußere Bodenverdichtungsring 12a besonders starken Verwindungskräften ausgesetzt, da dieser am Randbereich der Bodenwalze 10 angeordnet ist. Diese höheren Belastungen werden insbesondere durch auf äußeren Bodenverdichtungsringe 12a besonders stark wirkende Walkbewegungen hervorgerufen.

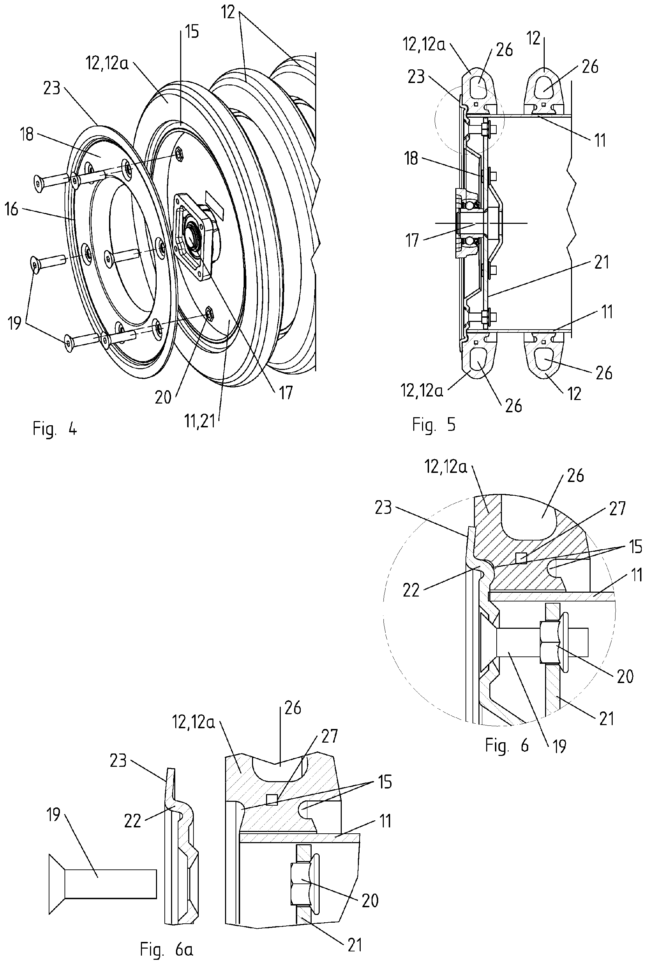

Um diesem Problem zu begegnen, wurde eine erste Verbesserung des Standes der Technik dahingehend vorgenommen, dass die Klemmronde 18 modifiziert wurde. Dieses ist in den Fig. 4 bis 6 und 6a dargestellt.

Der Vollständigkeit halber wird darauf hingewiesen, dass die in diesem Ausführungsbeispiel gezeigten Bodenverdichtungsringe 12, 12a als glatte Bodenverdichtungsringe 12, 12a ohne Noppen 13 ausgebildet sind. Hierbei handelt sich aber lediglich um eine andere Ausgestaltung der Bodenverdichtungsringe 12, 12a für ein anderes Bodenprofil, die auf die Befestigung und Lagerung an der Bodenwalze 10 im Übrigen keinen Einfluss hat.

Die hier gezeigte verbesserte Klemmronde 18 zeichnet sich dadurch aus, dass sie eine umfangsseitige Abstützkante 23 aufweist. Die Abstützkante 23 dient dazu, den äußeren Bodenverdichtungsring 12a des hier diskutierten Ausführungsbeispiels der Fig. 4 bis 6 seitlich etwas stärker abzustützen. Dies ist jedoch nur zum Teil erfolgreich, da sich im Bereich zwischen der Abstützkante 23 und dem anliegenden Bodenverdichtungsring 12a loses Material wie Erde, Steine und Ähnliches ansammeln kann. Hierdurch werden die Abstützung und die Laufeigenschaften des Rings 12a beeinträchtigt. Darüber hinaus wird der äußere Bodenverdichtungsring 12a bei den üblichen seitlichen Walkbewegungen bei der Bodenbearbeitung häufig über beziehungsweise auf die Abstützkante 23 gebogen. Dies kann dazu führen, dass die Seitenflanke des Bodenverdichtungsrings 12a durch die vergleichsweise dünne Abstützkante 23 stark beansprucht wird. Es kann insbesondere zu einem seitlichen Einschneiden des Bodenverdichtungsrings 12a kommen.

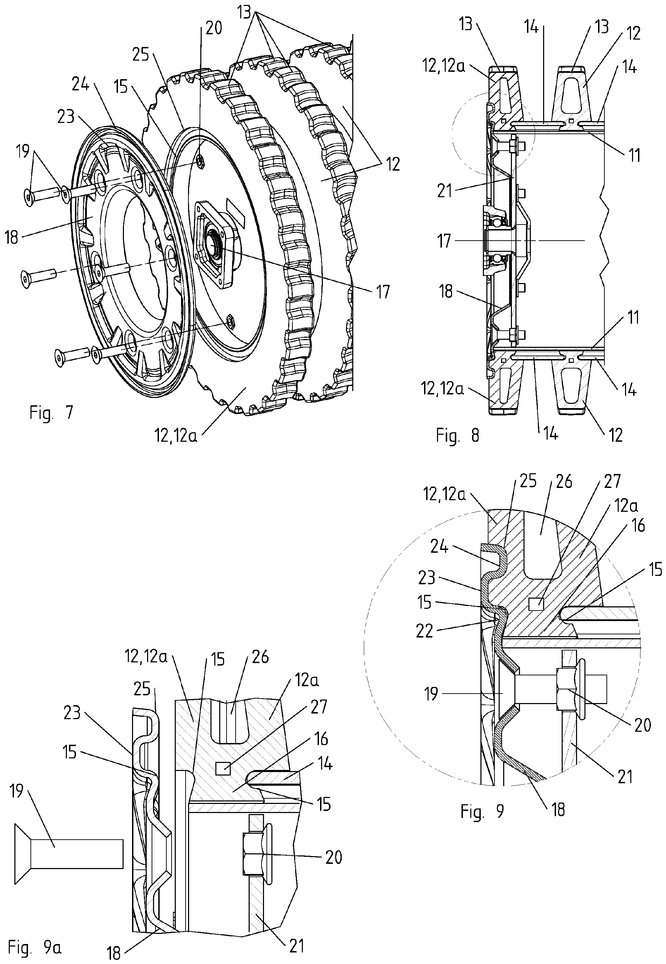

Die im Übrigen erfindungsgemäße Weiterentwicklung des Standes der Technik ist im Ausführungsbeispiel der Fig. 7 bis 9 und 9a gezeigt.

Hier wurde die Klemmronde 18 dahingehend weiter verbessert, dass zusätzlich zu Halteabschnitt 22 und Abstützkante 23 noch ein zusätzlicher Stützabschnitt 24 am äußeren Umfang der Klemmronde 18 angefügt wurde.

Dieser Stützabschnitt 24 korrespondiert in seiner Form mit einer entsprechenden Stütznut 25 am äußeren Bodenverdichtungsring 12a. Der Stützabschnitt 24 ist folglich korrespondierend zu dieser in dem Bodenverdichtungsring 12a angeordneten Stütznut 25 ausgebildet. Im Idealfall passen daher Stützabschnitt 24 und Stütznut 25 formschlüssig ineinander. Die Stütznut 25 ist in die Seitenflanke des äußeren Bodenverdichtungsrings 12a in eingelassener Weise angeordnet.

Der Stützabschnitt 24 weist hier eine U-förmige Ausbildung aus. Dies resultiert daher, dass die Klemmronde 18 durch Umformung aus einem Blech hergestellt ist. Um dementsprechend eine geeignete Ausbildung des Stützabschnitts 24 zum Einsetzen in die praktisch halbkreisförmige oder rechteckige Stütznut 25 zu erhalten, ist eine entsprechende U-förmige Ausbildung vorgesehen. Durch die U-förmige Ausbildung wird insbesondere vermieden, dass die freie Kante am Rand der Klemmronde 18 direkt am Bodenverdichtungsring 12, 12a anliegt und in diesen einschneidet.

Die Stütznut 25 ist hier als rechteckige Nut mit abgerundeten Ecken ausgebildet. Dies korrespondiert mit der U-förmigen Ausbildung des Stützabschnitts 24. Somit passen diese hier gerade formschlüssig ineinander.

Sowohl der Halteabschnitt 22 als auch der Stützabschnitt 24 greifen somit gleichzeitig in die entsprechenden Nuten 15 und 25 des Bodenverdichtungsrings 12a ein.

Hierdurch wird einerseits eine gute Abdichtung des Bereichs zwischen Klemmronde 18 und Bodenverdichtungsring 12, 12a sichergestellt. Loses Material, wie beispielsweise Erde, Steinchen oder Ähnliches, kann praktisch nicht mehr in diesen Zwischenbereich eindringen. Die Abdichtung erfolgt folglich nach Art einer Labyrinthdichtung.

Andererseits sorgen sowohl der Halteabschnitt 22 als auch die Stützabschnitte 24, die abstandet zueinander angeordnet sind, dafür, dass der Bodenverdichtungsring 12a sicher in Position gehalten wird. Die stabile Abstützung wird insbesondere dadurch erzielt, dass der Stützabschnitt 24 im Anschluss an die Abstützkante 23 einen größeren Außendurchmesser aufweist als die Abstandsringe 14. Dies ist insbesondere den Fig. 8 und 9 sowie 9a gut erkennbar. Der Halteabschnitt 22 der Klemmronde 18 greift dazu in die Haltenut 15 des Bodenverdichtungsrings 12a ein. Dementsprechend befinden sie sich von der Achse im Achslager 17 der Bodenwalze 10 aus betrachtet auf demselben Durchmesser. Die Abstützkante 23 und der Stützabschnitt 24 sind an einem größeren Durchmesser der Klemmronde 18 als der Halteabschnitt 22 angeordnet. Damit wird eine verbesserte seitliche Abstützung des Bodenverdichtungsrings 12a erreicht.

Durch die breite Anlageflächen des U-förmigen Stützabschnitt 24 in der Nut 25 des Bodenverdichtungsrings 12a eine sichere und zerstörungsarme Lagerung des Bodenverdichtungsrings 12a erreicht. Eine eventuelle Schneidwirkung am Bodenverdichtungsring 12, 12a, wie sie insbesondere beim Ausführungsbeispiel der Fig. 4 bis 6 auftreten kann, wird durch die erfindungsgemäße Ausbildung der Klemmronde 18 und der äußeren Bodenverdichtungsringe 12a mit Stütznuten 25 und Stützabschnitten 24 praktisch verhindert.

Die tatsächliche Ausbildung der Bodenverdichtungsringe 12, 12a kann variieren. Sowohl die mit Noppen 13 versehenen Bodenverdichtungsringe 12, 12a der Fig. 1 bis 3 als auch die glatten Bodenverdichtungsringe 12, 12a der Fig. 4 bis 6 und 6a lassen sich je nach Einsatzzweck ohne Weiteres verwenden. Auch können anderweitig ausgeformte oder profilierte Bodenverdichtungsringe 12, 12a verwendet werden. Auch ist die in allen Ausführungsbeispielen gezeigte Ausbildung der Bodenverdichtungsringe 12, 12a mit Hohlräumen 26 zur Federung und/oder zur Stabilisierung eingebrachten Drahteinlagen 27 vorteilhaft, aber nicht obligatorisch.

### Bezugszeichenliste:

- 10: Bodenwalze
- 11: Tragrohr
- 12: Bodenverdichtungsring
- 12a: äußerer Bodenverdichtungsring
- 13: Noppe
- 14: Abstandsring
- 15: Haltenut
- 16: Vorsprung
- 17: Achslager
- 18: Klemmronde
- 19: Schraube
- 20: Gewinde
- 21: Abschlussplatte
- 22: Halteabschnitt
- 23: Abstützkante
- 24: Stützabschnitt
- 25: Stütznut
- 26: Hohlraum
- 27: Drahteinlage

## Patentansprüche

1. Bodenwalze, zum streifenweisen Verdichten eines Bodens, insbesondere Erdbodens, mit einem um die Längsachse drehbar gelagerten, vorzugsweise zylinderförmigen oder rohrförmigen Tragkörper (11), und mehreren nebeneinander auf dem Tragkörper (11) angeordneten Bodenverdichtungsringen (12, 12a), wobei zwischen jeweils zwei Bodenverdichtungsringen (12, 12a) ein Abstandsring (14) angeordnet ist und wobei die Bodenverdichtungsringe (12, 12a) Haltenuten (15) zum seitlichen Eingreifen der Abstandsringe (14) aufweisen, vorzugsweise in den Seitenflächen beziehungsweise Seitenflanken der Bodenverdichtungsringe (12, 12a), **dadurch gekennzeichnet, dass** jeder der beiden äußeren Bodenverdichtungsringe (12, 12a) auf dem Tragkörper (11) wenigstens eine zum Tragkörper in radial Richtung beabstandete Stütznut (25) aufweist, die für ein Eingreifen eines mit dem Tragkörper (11) verbundenen Stützabschnitts (24) vorgesehen ist, dass der Durchmesser der Stütznut (25) größer ist als der Durchmesser der Haltenut (15).

2. Bodenwalze nach Anspruch 1, **dadurch gekennzeichnet, dass** die wenigstens eine Stütznut (25) zusätzlich zu einer Haltenut (15) in zumindest einer der Seitenflächen beziehungsweise Seitenflanken der äußeren Bodenverdichtungsringe (12, 12a) angeordnet ist.

3. Bodenwalze nach Anspruch 1 oder 2, **dadurch gekennzeichnet, dass** die wenigstens eine Stütznut (25) in nur einer der Seitenflächen beziehungsweise Seitenflanken angeordnet ist, insbesondere der nach außen weisenden.

4. Bodenwalze nach einem der vorhergehenden Ansprüche, **dadurch gekennzeichnet, dass** die Stütznut (25) und/oder die Haltenut (15) kreisförmig umlaufend ausgebildet ist/sind.

5. Bodenwalze nach einem der vorhergehenden Ansprüche, **dadurch gekennzeichnet, dass** der Querschnitt des randseitigen Stützabschnitts (24) zum Querschnitt der Stütznut (25) korrespondierend ausgebildet ist, vorzugsweise formschlüssig.

6. Bodenwalze nach einem der vorhergehenden Ansprüche, **dadurch gekennzeichnet, dass** die Stütznut (25) und/oder der Stützabschnitt (24) einen zumindest im Wesentlichen halbkreisförmigen, trapezförmigen oder rechteckigen Querschnitt aufweist beziehungsweise aufweisen.

7. Bodenwalze nach einem dem vorhergehenden Ansprüche, **dadurch gekennzeichnet, dass** der Stützabschnitt (24) zum Eingreifen in die Stütznut (25) an wenigstens einer Klemmronde (18) ausgebildet ist.

8. Bodenwalze nach Anspruch 8, **dadurch gekennzeichnet, dass** sich der Stützabschnitt (24) randseitig beziehungsweise umfangsseitig der Klemmronde (18) befindet.

9. Bodenwalze nach Anspruch 7 oder 8, **dadurch gekennzeichnet, dass** die Bodenverdichtungsringe (12, 12a) und die Abstandsringe (14) mittels zweier endseitig beziehungsweise außenseitig des Tragkörpers (11) angeordneter Klemmronden (18) miteinander verspannt sind, wobei vorzugsweise wenigstens eine der Klemmronden (18) mit dem Tragkörper (11) lösbar verbunden ist, weiter vorzugsweise mittels Schrauben (19).

10. Bodenwalze nach einem der Ansprüche 8 bis 10, **dadurch gekennzeichnet, dass** der Stützabschnitt (24) der Klemmronde (18) aus dem Material der Klemmronde (18) gebildet ist, insbesondere daraus geformt beziehungsweise gebogen ist, wobei die Klemmronde (18) mit dem Stützabschnitt (24) vorzugsweise einstückig ausgebildet ist.

11. Bodenwalze nach einem der Ansprüche 7 bis 10, **dadurch gekennzeichnet, dass** der Stützabschnitt (24) und/oder wenigstens ein Halteabschnitt (22) an der Klemmronde (18) ausgebildet ist/sind, wobei vorzugsweise der Stützabschnitt (24) und/oder der Halteabschnitt (22) vorzugsweise jeweils als U-förmiger Randabschnitt der Klemmronde (18) ausgebildet sind/ist, besonders bevorzugt als umlaufender Randabschnitt.

12. Bodenwalze nach einem der Ansprüche 7 bis 11, **dadurch gekennzeichnet, dass** die Klemmronde (18) sowohl in die Haltenut (15) als auch in die Stütznut (25) des zugeordneten Bodenverdichtungsrings (12, 12a) eingreift.

13. Bodenwalze nach einem der Ansprüche 7 bis 12, **dadurch gekennzeichnet, dass** der Kontakt zwischen Bodenverdichtungsring (12, 12a) und Klemmronde (18), insbesondere das Eingreifen der Klemmronde (18) in Stütznut (25) und Haltenut (15) des Bodenverdichtungsrings (12, 12a), nach Art einer Labyrinthdichtung erfolgt.

14. Bodenwalze nach einem der Ansprüche 7 bis 13, **dadurch gekennzeichnet, dass** der Außendurchmesser der Klemmronde (18) größer ist als der Außendurchmesser der Abstandsringe (14), wobei insbesondere der Stützabschnitt (24) der Klemmronde (18) einen größeren Außendurchmesser aufweist als die Abstandsringe (14).

## Claims

1. Soil roller for strip-wise compaction of soil, in particular earth, the soil roller comprising a supporting body (11), which is mounted so as to be rotatable about the longitudinal axis and is preferably cylindrical or tubular, and a plurality of soil compaction rings (12, 12a), which are arranged next to one another on the supporting body (11), a spacer ring (14) being arranged in each case between two soil compaction rings (12, 12a), and the soil compaction rings (12, 12a) having retaining grooves (15) for laterally engaging the spacer rings (14), preferably in the side surfaces or side flanks of the soil compaction rings (12, 12a),
**characterized in that** each of the two outer soil compaction rings (12, 12a) on the supporting body (11) has at least one support groove (25) which is spaced apart from the supporting body in the radial direction and is provided for engaging a support portion (24) connected to the supporting body (11) by the diameter of the support groove (25) being greater than the diameter of the retaining groove (15).

2. Soil roller according to claim 1, **characterized in that** the at least one support groove (25) is arranged in addition to a retaining groove (15) in at least one of the side surfaces or side flanks of the outer soil compaction rings (12, 12a).

3. Soil roller according to claim 1 or 2, **characterized in that** the at least one support groove (25) is arranged in only one of the side surfaces or side flanks, in particular that which points outwards.

4. Soil roller according to any of the preceding claims, **characterized in that** the support groove (25) and/or the retaining groove (15) are/is designed to extend round in a circular manner.

5. Soil roller according to any of the preceding claims, **characterized in that** the cross section of the edge-side support portion (24) is designed to correspond to the cross section of the support groove (25), preferably in a form-fitting manner.

6. Soil roller according to any of the preceding claims, **characterized in that** the support groove (25) and/or the support portion (24) have/has a cross section that is at least substantially semicircular, trapezoidal or rectangular.

7. Soil roller according to any of the preceding claims, **characterized in that,** in order to engage in the support groove (25), the support portion (24) is formed on at least one circular clamping blank (18).

8. Soil roller according to claim 8, **characterized in that** the support portion (24) is located on the edge or on the circumference of the circular clamping blank (18).

9. Soil roller according to claim 7 or 8, **characterized in that** the soil compaction rings (12, 12a) and the spacer rings (14) are braced with one another by means of two circular clamping blanks (18) arranged at the ends of or on the outside of the supporting body (11), preferably at least one of the circular clamping blanks (18) being detachably connected to the supporting body (11), further preferably by means of screws (19).

10. Soil roller according to any of claims 8 to 10, **characterized in that** the support portion (24) of the circular clamping blank (18) is formed from the material of the circular clamping blank (18), in particular is shaped or bent therefrom, the clamping circular blank (18) preferably being formed integrally with the support portion (24).

11. Soil roller according to any of claims 7 to 10, **characterized in that** the support portion (24) and/or at least one retaining portion (22) are/is formed on the circular clamping blank (18), preferably each of the support portion (24) and/or the retaining portion (22) preferably being designed as a U-shaped edge portion of the circular clamping blank (18), particularly preferably as a circumferential edge portion.

12. Soil roller according to any of claims 7 to 11, **characterized in that** the circular clamping blank (18) engages both in the retaining groove (15) and in the support groove (25) of the associated soil compaction ring (12, 12a).

13. Soil roller according to any of claims 7 to 12, **characterized in that** the contact between the soil compaction ring (12, 12a) and the circular clamping blank (18), in particular the engagement of the circular clamping blank (18) in the support groove (25) and the retaining groove (15) of the soil compaction ring (12, 12a), takes place in the manner of a labyrinth seal.

14. Soil roller according to any of claims 7 to 13, **characterized in that** the outer diameter of the circular clamping blank (18) is larger than the outer diameter of the spacer rings (14), in particular the support portion (24) of the circular clamping blank (18) has a larger outer diameter than the spacer rings (14).

## Revendications

1. Rouleau compresseur, destiné au compactage par bandes d'un sol, en particulier de la terre, présentant un corps support (11), de préférence cylindrique ou tubulaire, logé rotatif autour de l'axe longitudinal et plusieurs bagues (12, 12a) de compactage de sol agencées les unes à côté des autres sur le corps support (11), une bague d'écartement (14) étant agencée entre à chaque fois deux bagues (12, 12a) de compactage de sol et les bagues (12, 12a) de compactage de sol présentant des rainures de retenue (15) pour venir en prise latéralement avec les bagues d'écartement (14), de préférence dans les faces latérales ou, selon le cas, les flancs latéraux des bagues (12, 12a) de compactage de sol, **caractérisé en ce que** chacune des deux bagues (12, 12a) externes de compactage de sol sur le corps support (11) présente au moins une rainure d'appui (25) éloignée du corps support dans la direction radiale, qui est destinée à venir en prise avec une section d'appui (24) reliée au corps support (11) et **en ce que** le diamètre de la rainure d'appui (25) est supérieur au diamètre de la rainure de retenue (15).

2. Rouleau compresseur selon la revendication 1, **caractérisé en ce que** ladite au moins une rainure d'appui (25) est agencée dans au moins l'un(e) des surfaces latérales ou, selon le cas, flancs latéraux des bagues (12, 12a) externes de compactage du sol, en plus d'une rainure de retenue (15).

3. Rouleau compresseur selon la revendication 1 ou 2, **caractérisé en ce que** ladite au moins une rainure d'appui (25) n'est agencée que dans l'un(e) des surfaces latérales ou, selon le cas, flancs latéraux, en particulier celle/celui orienté(e) vers l'extérieur.

4. Rouleau compresseur selon l'une quelconque des revendications précédentes, **caractérisé en ce que** la rainure d'appui (25) et/ou la rainure de retenue (15) est/sont conçue(s) avec une périphérie circulaire.

5. Rouleau compresseur selon l'une quelconque des revendications précédentes, **caractérisé en ce que** la section transversale de la section d'appui (24) au niveau du bord est conçue de manière correspondante à la section transversale de la rainure d'appui (25), de préférence par complémentarité de forme.

6. Rouleau compresseur selon l'une quelconque des revendications précédentes, **caractérisé en ce que** la rainure d'appui (25) et/ou la section d'appui (24) présente(nt) une section transversale au moins sensiblement en forme de demi-cercle, de trapèze ou de rectangle.

7. Rouleau compresseur selon l'une quelconque des revendications précédentes, **caractérisé en ce que** la section d'appui (24) est conçue pour venir en prise dans la rainure d'appui (25) au niveau d'au moins un flan circulaire de serrage (18).

8. Rouleau compresseur selon la revendication 8, **caractérisé en ce que** la section d'appui (24) se trouve au niveau du bord ou, selon le cas, de la périphérie du flan circulaire de serrage (18).

9. Rouleau compresseur selon la revendication 7 ou 8, **caractérisé en ce que** les bagues (12, 12a) de compactage du sol et les bagues d'écartement (14) sont serrées l'une avec l'autre au moyen de deux flancs circulaires de serrage (18) agencés sur le côté d'extrémité ou, selon le cas, externe du corps support (11), au moins l'un des flancs circulaires de serrage (18) étant de préférence relié de manière détachable au corps support (11), plus préférablement au moyen de vis (19).

10. Rouleau compresseur selon l'une quelconque des revendications 8 à 10, **caractérisé en ce que** la section d'appui (24) des flancs circulaires de serrage (18) est formée par le matériau du flan circulaire de serrage (18), en particulier moulée ou pliée à partir de celui-ci, le flan circulaire de serrage (18) étant de préférence conçu d'une seule pièce avec la section d'appui (24).

11. Rouleau compresseur selon l'une quelconque des revendications 7 à 10, **caractérisé en ce que** la section d'appui (24) et/ou au moins une section de retenue (22) est/sont conçue(s) au niveau du flan circulaire de serrage (18), la section d'appui (24) et/ou la section de retenue (22) étant de préférence à chaque fois conçue(s) sous forme d'une section de bord en forme de U du flan circulaire de serrage (18), de manière particulièrement préférée sous forme de section périphérique de bord.

12. Rouleau compresseur selon l'une quelconque des revendications 7 à 11, **caractérisé en ce que** le flan circulaire de serrage (18) vient en prise aussi bien dans la rainure de retenue (15) que dans la rainure d'appui (25) de la bague (12, 12a) de compactage de sol associée.

13. Rouleau compresseur selon l'une quelconque des revendications 7 à 12, **caractérisé en ce que** le contact entre la bague (12, 12a) de compactage de sol et le flan circulaire de serrage (18), en particulier la prise du flan circulaire de serrage (18) dans la rainure d'appui (25) et la rainure de retenue (15) de la bague (12, 12a) de compactage de sol est réalisé selon un joint à labyrinthe.

14. Rouleau compresseur selon l'une quelconque des revendications 7 à 13, **caractérisé en ce que** le diamètre externe du flanc circulaire de serrage (18) est supérieur au diamètre externe des bagues d'écartement (14), la section d'appui (24) du flanc circulaire de serrage (18) présentant en particulier un diamètre externe plus grand que celui des bagues d'écartement (14).
